Europäisches Patentamt

European Patent Office

Office européen des brevets

(11) Numéro de publication: **0 196 247**

**A1**

## (12) DEMANDE DE BREVET EUROPEEN

(21) Numéro de dépôt: **86400399.1**

(22) Date de dépôt: **25.02.86**

(51) Int. Cl.4: **B60R 11/04**

(30) Priorité: **27.02.85 FR 8502811**

(43) Date de publication de la demande:
**01.10.86 Bulletin 86/40**

(84) Etats contractants désignés:
**AT BE CH DE FR GB IT LI LU NL SE**

(71) Demandeur: **LAMBOLEZ, Claude**
**14, rue de la Chapelle**
**F-88160 Le Thillot(FR)**

(72) Inventeur: **LAMBOLEZ, Claude**
**14, rue de la Chapelle**
**F-88160 Le Thillot(FR)**

(74) Mandataire: **Chevallier, Robert Marie Georges et al**
**Cabinet BOETTCHER 23, rue La Boétie**
**F-75008 Paris(FR)**

(54) **Dispositif pour l'équipement d'un véhicule servant à la prise de vues d'un point élevé au-dessus du sol.**

㊗ Dispositif pour l'équipement d'un véhicule servant à la prise de vues d'un point élevé au-dessus du sol.

Il comprend deux traverses (1,2) et au moins un longeron (3) déplaçable le long des traverses (1,2) et muni d'un moyen de réglage en position (11) pourvu d'un bras (15) s'étendant vers l'extérieur du véhicule et équipé d'un collier - (16) contenant le tronçon fixe de base d'un mât télescopique (18), cependant que l'une au moins des traverses est pourvue d'un berceau (19) apte à recevoir le mât (18) quand il est mis en position horizontale.

Fig.1

# DISPOSITIF POUR L'EQUIPEMENT D'UN VEHICULE SERVANT A LA PRISE DE VUES D'UN POINT ELEVE AU-DESSUS DU SOL.

L'invention a pour objet un dispositif dont le rôle est d'équiper facilement, rapidement, sans transformation, un véhicule automobile, par exemple une berline, pour permettre de réaliser à l'aide de ce véhicule ainsi équipé des prises de vues à partir d'un point élevé au-dessus du sol.

Il existe dans le commerce des mâts télescopiques. Il est extrêmement intéressant d'équiper un véhicule automobile quelconque, et spécialement une berline ou conduite intérieure, d'un mât télescopique de façon à pouvoir mettre rapidement ce mât en position verticale d'extension pour prendre des photographies par exemple, ou en position horizontale de rétraction compatible avec les réglements de la circulation pour circuler avec le véhicule.

Le but principal de l'invention est d'apporter un tel équipement qui a, en plus, l'avantage de pouvoir être lui-même mis en place facilement et rapidement sur un véhicule ou retiré de ce véhicule.

Quand un mât est destiné à la prise de vues à l'aide d'une caméra ou d'un appareil photographique, il est nécessaire que la caméra et/ou l'appareil photographique soient montés au sommet du mât par l'intermédiaire d'un organe de montage permettant un réglage facile de l'inclinaison de ces appareils par rapport à l'horizontale, autour de deux axes au moins.

L'invention a pour but secondaire d'apporter aussi un organe de montage se fixant au sommet du mât télescopique et permettant les réglages désirés en inclinaison autour de deux axes de la position des appareils portés par ce mât.

Selon un aspect d'un dispositif conforme à l'invention, il comprend deux traverses se fixant au-dessus du pavillon d'un véhicule automobile et au moins un longeron monté sur ces deux traverses.

Selon une première variante de l'invention, le longeron est déplaçable le long des deux traverses dans le sens longitudinal de celles-ci et ce longeron porte un moyen de réglage en position ayant un premier passage avec un moyen de blocage en position traversé par le longeron et un second passage orthogonal au premier passage avec un moyen de blocage en position traversé par un bras ayant à une extrémité un collier de maintien du tronçon fixe d'un mât télescopique ; en outre, l'une au moins des deux traverses est pourvue d'un berceau capable de recevoir le tronçon fixe du mât télescopique quand ce tronçon est mis en position horizontale, de préférence dans le sens longitudinal du véhicule.

Selon une seconde variante de l'invention, le longeron est composé d'un premier élément fixé aux traverses et d'un second élément qui est mobile par rapport au premier élément dans le sens longitudinal de ce dernier. Par exemple, le second élément est un élément coulissant qui est pourvu à une partie extrême libre d'un moyen de réglage tel que défini ci-dessus également équipé d'un bras portant le mât télescopique.

De préférence, selon cette seconde variante les traverses portent deux longerons espacés ayant chacun un premier élément fixé aux traverses ; ces longerons sont tous deux de type télescopique avec chacun au moins un élément mobile déplaçable dans le sens longitudinal du véhicule; la partie extrême libre arrière de chaque élément mobile est fixée à une extrémité respective d'une barre transversale; cette barre transversale porte le moyen de réglage.

Selon une variante simplifiée de réalisation, une barre oblique de type télescopique est montée pivotante par une extrémité sur l'élément fixe d'un longeron et par l'extrémité opposée sur l'élément coulissant de l'autre longeron.

Selon une variante de réalisation prévue pour assurer un service intensif, les deux longerons ont leurs premiers éléments fixes qui sont réunis par des barres transversales pour constituer un chemin de guidage rigide et leurs seconds éléments mobiles sont aussi réunis par des barres transversales pour constituer un chariot rigide déplaçable par coulissement ou par roulement le long du chemin de guidage.

Selon un mode de réalisation de l'invention, le véhicule est muni à la partie inférieure de la carrosserie, à l'arrière ou sur un côté, d'un moyen de soutien sur lequel peut reposer l'extrémité inférieure du mât. Selon un autre mode de réalisation de l'invention, le mât télescopique est muni à sa partie inférieure en position d'utilisation de vérins de soutien destinés à reposer sur le sol.

Pour permettre de régler à partir du sol la position d'un appareil supporté par le mât télescopique quand celui-ci est dressé et développé, l'équipement comprend, selon l'invention, un organe de montage ayant une plaque de base fixe et une plateforme supérieure inclinable autour de deux axes qui sont de préférence perpendiculaires.

La plaque de base fixe supporte un premier palier pour un premier axe sur lequel est montée une plaque intermédiaire : un premier moteur est fixé à la plaque de base et son arbre est articulé par un moyen de liaison fonctionnelle avec la plaque intermédiaire afin de faire pivoter celle-ci autour de son arbre en fonction de la rotation du moteur. La plaque intermédiaire supporte un second palier pour un second axe qui porte une plateforme supérieure et qui est orthogonal au premier axe; un second moteur est fixé à la plaque intermédiaire et son arbre est articulé par un moyen de liaison fonctionnelle avec une plateforme supérieure.

De préférence, la plateforme supérieure est munie de moyens de fixation d'un appareil photographique ou d'une caméra de cinéma ayant un viseur et d'une caméra de télévision disposée en arrière dudit viseur sur l'axe optique de ce dernier.

On donnera maintenant sans intention limitative et sans exclure aucune variante une description de plusieurs exemples de réalisation de l'invention. On se reportera aux dessins annexés dans lesquels :

-la figure 1 est une vue générale en perspective d'un dispositif conforme à une première variante de l'invention, équipant un véhicule automobile,

-la figure 2 est une vue générale en perspective d'un dispositif conforme à une deuxième variante de l'invention équipant un véhicule automobile, le mât nétant pas représenté,

-la figure 3 est une vue partielle en perspective de l'arrière du dispositif de la figure 2 avec le mât dressé,

-la figure 4 est une vue en perspective de l'arrière du dispositif de la figure 2 avec le mât dressé muni d'un organe de montage d'appareils de prise de vues,

-la figure 5 est une vue générale schématique en perspective de l'organe de montage de la figure 4 ,

-les figures 6 et 7 sont des vues analogues aux figures 2 et 3 montrant respectivement des variantes de réalisation dans lesquelles les premiers éléments constituent un chemin de guidage fixe et les seconds éléments constituent un chariot mobile.

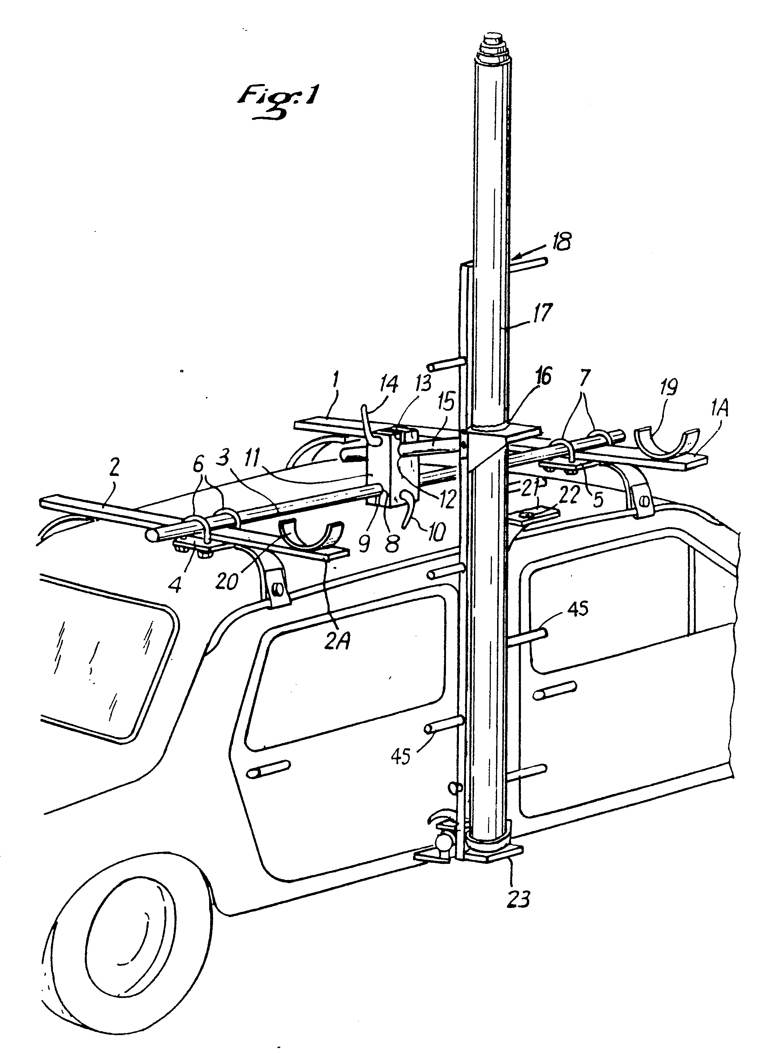

La figure 1 montre un véhicule automobile sur le pavillon duquel sont montées, de manière connue en soi, deux traverses 1, 2. Ces deux traverses 1,2 supportent un longeron 3 qui est susceptible d'être déplacé par glissement le long des traverses 1, 2, par exemple grâce à des patins 4, 5 qui glissent sous les traverses 1, 2 et qui sont traversés chacun par une paire d'arceaux 6, 7. Ces derniers passent sur le longeron 3 et permettent de l'immobiliser solidement en un point quelconque de sa course. Ce même longeron 3 passe à travers un premier passage 8, associé à une fente 9 et à une vis de serrage 10, d'un moyen de réglage 11. Celui-ci possède un second passage 12, associé à une fente 13 et à une vis de serrage 14. Ce second passage 12 est disposé orthogonalement au premier passage 8 et il est traversé par un bras 15 dont l'extrémité libre située vers l'extérieur du véhicule est munie d'un collier 16. Ce dernier entoure librement en rotation le tronçon fixe 17 en position d'utilisation d'un mât télescopique 18. Les deux traverses 1, 2 sont prolongées vers l'extérieur dans le même sens que le bras 15 et leurs prolongements 1A, 2A sont pourvus chacun d'un berceau 19, 20 respectivement, apte à contenir le tronçon de base 17 du mât 18. Celui-ci est muni sur un côté d'un support 21 muni d'un niveau à bulle 22 qui permet de vérifier la verticalité du mât 18. A sa partie inférieure la carrosserie est pourvue d'une sphère de soutien, amovible, sur laquelle peut reposer une plaque 23 qui porte le mât 18 en le laissant libre de tourner autour de son axe quand il est dressé.

Il est extrêmement simple et rapide, à l'aide des vis de serrage 10, 14, à poignées de manoeuvre, de faire passer le mât 18 d'une position horizontale où il est retenu dans les berceaux 19, 20 à une position verticale où il repose sur la plaque de soutien 23 et où il est solidement bloqué, après réglage de sa verticalité à l'aide du niveau à bulle 22.

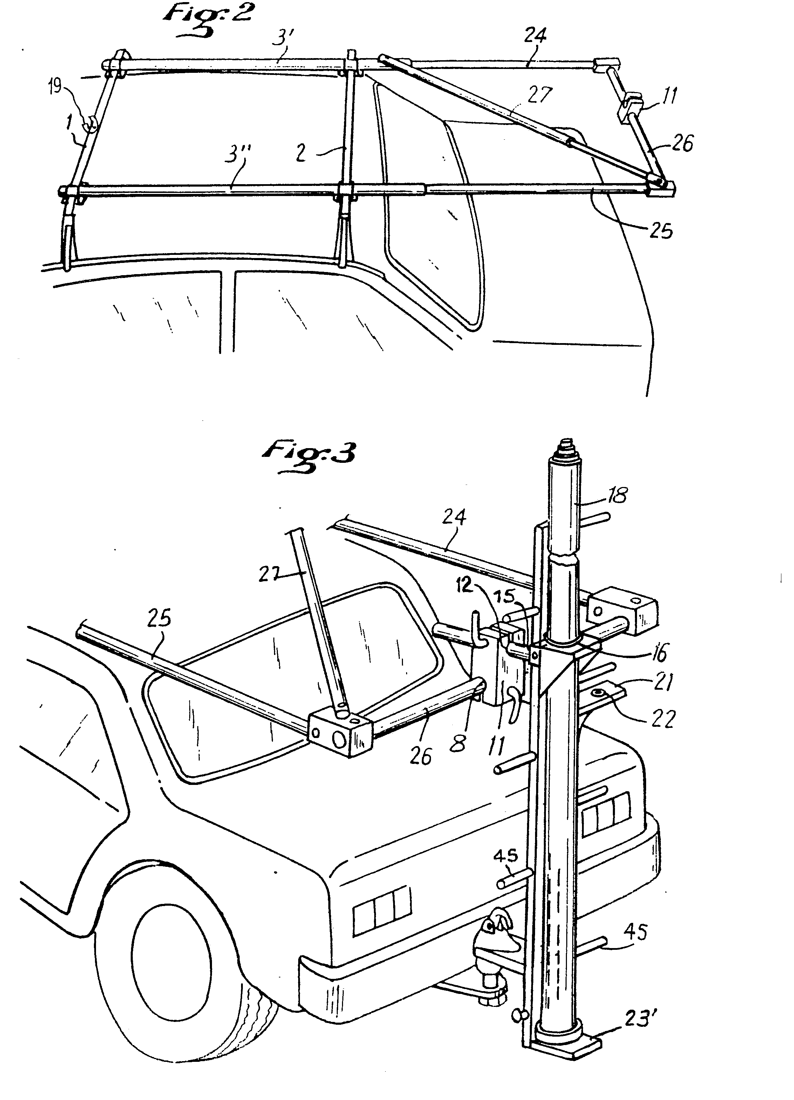

Dans l'exemple des figures 2 et 3, les traverses 1 et 2 sont réunies de préférence par deux longerons qui ont des éléments fixes 3', 3" espacés, pour une meilleure rigidité générale. Ces premiers éléments fixes des longerons contiennent chacun télescopiquement un second élément coulissant 24, 25 qui peut être escamoté ou allongé. Les deux éléments coulissants 24, 25 sont réunis à leurs extrémités libres par une barre transversale 26 qui est contenue dans le premier passage 8 d'un bloc de réglage 11. Le deuxième passage 12 de ce dernier contient un bras 15 muni du collier 16 dans lequel est tenu le mât 18. La traverse 1, la plus éloignée de la barre transversale 26 porte un berceau 19 dans lequel peut reposer l'élément de base 17 du mât 18 quand il est mis en position horizontale. Pour assurer une meilleure rigidité, une barre oblique télescopique 27 est montée pivotante par une extrémité à l'extrémité du longeron 3' proche de la barre transversale 26 et par son extrémité opposée à l'angle où sont réunies cette barre transversale 26 et l'extrémité libre de l'élément coulissant 25 de l'autre longeron 3".

Alors que selon l'exemple de la figure 1, le mât 18 peut être dressé sur un côté du véhicule, dans l'exemple des figures 2 à 4 il peut être dressé à l'arrière du véhicule comme le montre la figure 4.

Le mât dressé peut être soutenu par une plaque de soutien 23' montée à l'arrière du véhicule, provisoirement, par exemple à l'aide d'une sphère de remorquage (figure 3). En variante (figure 4), le mât peut être muni à sa partie inférieure de deux vérins espacés 28,29 destinés à reposer sur le sol.

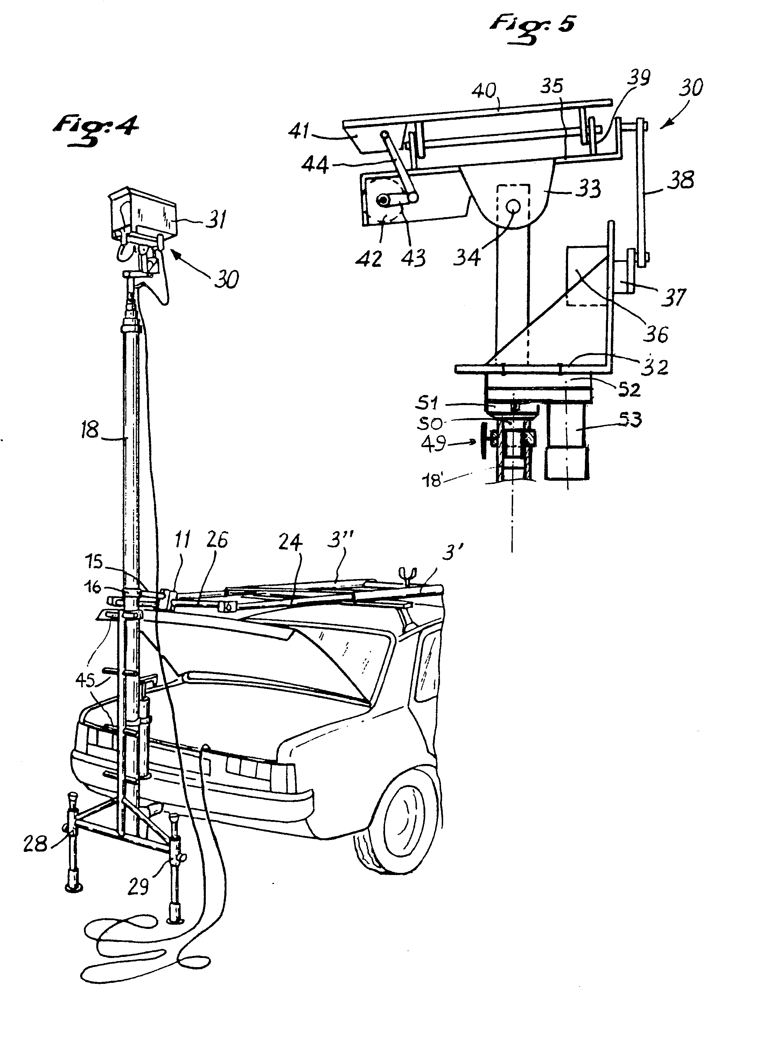

La figure 4 montre le mât 18 dressé mais non encore déployé. Son extrémité supérieure est pourvue d'un organe de montage 30 dont on décrira la constitution en se reportant à la figure 5. Auparavant, on fera observer que sur la figure 4, l'organe de montage 30 est couvert d'un capot 31 de protection des appareils, qui n'est pas représenté sur la figure 5.

L'organe de montage 30 comprend une plaque de base 32 destinée à être fixée solidement au sommet du mât 18. Cette plaque de base 32 porte un premier palier 33 contenant un premier axe auquel est fixée par sa face inférieure une plaque intermédiaire 35. La plaque de base 32 supporte aussi un premier moteur 36 dont l'arbre est pourvu d'une manivelle 37 qui est réunie fonctionnellement au plateau intermédiaire 35 à l'aide d'une bielle 38. La plaque intermédiaire 35 porte sur sa face supérieure un second palier 39 contenant un second axe 40 auquel est fixée par sa face inférieure une plateforme supérieure 41. La plaque intermédiaire 35 supporte aussi un second moteur 42 dont l'arbre est muni d'une manivelle 43 qui est réunie fonctionnellement à la plateforme supérieure 41 par une bielle 44.

Les moteurs 36 et 42 sont des moteurs électriques courants ou pas à pas, pouvant être commandés à distance, par exemple par onde radio. Les deux axes 34 et 40 sont de préférence orthogonaux. On peut donc régler facilement l'inclinaison des appareils supportés par la plateforme supérieure 41 par rapport aux deux axes 39 et 40.

La plateforme supérieure 41 est équipée sur sa face supérieure de moyens (non représentés) facilitant la mise en place et la fixation d'appareils. Avantageusement, ces moyens permettent de fixer un appareil photographique ayant un viseur ou une caméra de cinéma ayant aussi un viseur et, en arrière de ce viseur, sur son axe optique, une caméra de télévision.

Le dispositif de l'invention est simple, facile à installer, il permet de mettre un mât télescopique 18 d'une hauteur totale de 5 à 30 m à l'état déployé ou à l'état rétracté, rapidement, et, ensuite, de circuler sans difficulté avec le véhicule. Pour les prises de vues photographiques ou cinématographiques ou autres à partir d'un point élevé au-dessus du sol, il est important, pendant un reportage par exemple, de pouvoir dresser le mât, de pouvoir le ranger, de se déplacer et de pouvoir le dresser à nouveau avec un minimum d'opérations et de temps.

On remarquera que dans le cas des figures 2 à 4, il serait possible de n'utiliser qu'un seul longeron 3', en lui donnant des dimensions suffisantes, avec un seul élément coulissant 24, ce dernier étant pourvu à sa partie extrême libre du moyen de réglage 11, un berceau 19 se trouvant en correspondance sur la traverse 1.

Bien entendu, pour les mâts les plus longs, par exemple à partir de 15 m de haut à l'état déployé, les moyens télescopiques peuvent être munis de douilles à billes facilitant leurs mouvements; on ne sortirait pas du cadre de l'invention en remplaçant le glissement par un roulement par exemple à l'aide de patins à billes ou de roulettes.

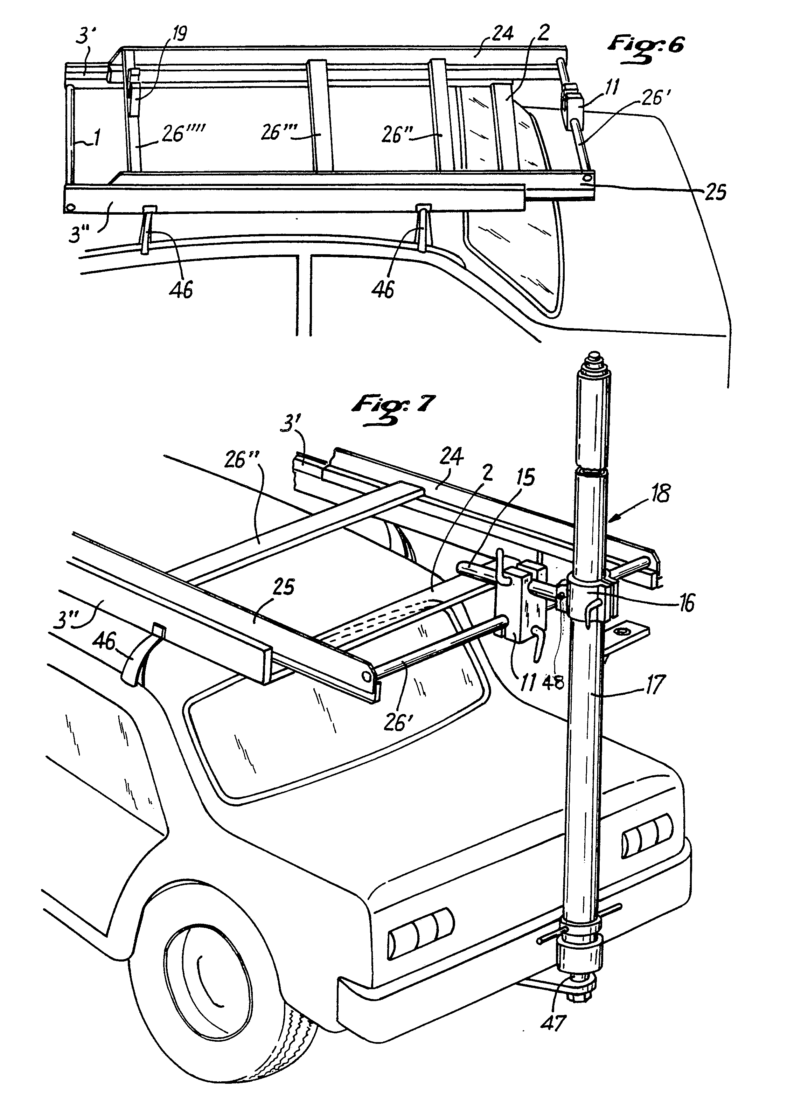

Les figures 6 et 7 se rapportent précisément à un mode de réalisation moins simplifié que celui des figures 1 à 3 et permettant un usage plus intensif. En raison de la grande similitude de fonction des pièces constitutives on a utilisé sur ces figures 6 et 7 les mêmes références numériques que sur la figure 2. Les longerons ont des premiers éléments 3' et 3" réunis par des barres transversales 1, 2 pour constituer un ensemble rigide qui est fixé à la carrosserie du véhicule par des moyens de fixation 46 de manière connue en soi. Cet ensemble constitue un chemin de guidage disposé dans le sens longitudinal du véhicule. Les longerons comprennant des seconds éléments mobiles 24, 25 qui sont eux aussi réunis par plusieurs barres transversales 26', 26", 26"', 26"" pour constituer un chariot rigide. Ce dernier est monté déplaçable par roulement à l'aide de petits galets ou de billes (non visibles sur les figures 6, 7). Une barre transversale extrême 26' située du côté de l'arrière du véhicule porte le bloc de réglage 11 ; la barre transversale extrême opposée 26"" porte un berceau 19, de préférence dans l'axe du véhicule. De ce fait, le mât télescopique 18 est destiné à être dressé à l'arrière du véhicule comme dans l'exemple de la figure 3, mais, quand il est dressé (figure 7), il repose directement sur la boule classique de remorquage 47 dont est équipé le véhicule ; la face extrême inférieure de sa base est alors creusée d'un logement capable de recevoir cette boule. Le bras 15 qui est réglable en position et immobilisable dans le bloc de réglage 11 est muni du collier 16. Ce dernier est fendu et pourvu d'une vis à poignée de serrage. Ainsi le tronçon de base 17 du mât télescopique 18 peut coulisser dans le collier 16 quand celui-ci est desserré.

Quelle que soit la variante utilisée, le mât 18 est réglable en verticalité pendant le contrôle à 1 aide du niveau à bulle 22, par pivotement du bras 15 dans le moyen de réglage 11 et par pivotement de ce dernier autour du longeron 3, quand les vis de serrage 10 et 14 sont débloquées. Le mât 18 peut ensuite être orienté autour de son propre axe longitudinal par rotation à l'intérieur du collier 16. Si cette rotation est légèrement dure, un blocage n'est pas nécessaire. La plateforme supérieure 41 est mise ensuite à l'inclinaison désirée au moyen des moteurs 36 et 41 commandés à distance.

Avantageusement, il est possible de munir le tronçon inférieur 17 du mât 18 d'échelons 45 qui facilitent l'accès aux appareils portés par la plateforme supérieure 41 lorsque le mât est rétracté et encore vertical (figures 1 et 3).

On remarquera que le bras 15 est avantageusement réuni au collier 16 par le moyen d'une solution mécanique qui comprend une articulation; celle-ci est réalisée de préférence, par exemple, à l'aide d'un axe 48 qui est disposé diamétralement dans la partie extrême du bras 15 en étant soutenu dans un bossage 49 faisant partie du collier 16 à une position perpendiculaire à la direction générale du mât 18. Cette articulation facilite grandement la manoeuvre du mât entre ses positions horizontale et verticale, le bras 15 accomplissant un mouvement de 180° pendant que le mât accomplit un mouvement de 90°. Le bras 15 articulé est utile aussi pour abaisser et soulever le mât 18 par rapport à la boule de remorquage 47.

Quand le mât 18 est monté à l'intérieur d'un collier 16 à moyens de serrage et de desserrage, il est possible de le faire tourner sur lui-même pour orienter l'organe de montage 30. Cependant, il est préférable dans de nombreuses circonstances de monter sur la partie extrême supérieure 18' (figure 5) du dernier tronçon du mât 18 un moyen de blocage 49 permettant d'immobiliser en haut de ce mât un arbre court 50 qui est contenu dans un palier 51. Ce dernier est fixé sous une plaque 52 sous la face inférieure de laquelle est également fixé un moteur 53. La plaque 52 est elle-même fixée à la face inférieure de la plaque de base 32. Il existe une liaison cinématique entre le moteur 53 et le palier 51 telle que, sous l'effet de ce moteur, l'ensemble peut tourner, en orientation, autour de l'axe du mât 18. Autrement dit, l'organe de montage 30 est monté de manière orientable au sommet du mât 18 autour de l'axe général de ce dernier. Le moteur 53 est commandé à distance de la même façon que les deux moteurs 36 et 42.

Bien entendu, le chariot mobile décrit plus haut en référence aux figures 6 et 7 est pourvu de moyens de blocage en position (non représentés), servant à l'immobiliser solidement à ses deux positions extrêmes qui correspondent aux positions du mât couché ou du mât dressé.

## Revendications

1. Dispositif pour l'équipement d'un véhicule servant à la prise de vues à partir d'un point élevé au-dessus du sol caractérisé en ce qu'il comprend deux traverses espacées (1,2) se fixant au-dessus du pavillon de ce véhicule et au moins un longeron (3) déplaçable et immobilisable en position le long de ces traverses (1,2), ce longeron (3) portant un moyen de réglage en position (11) ayant un premier passage (8) traversé par ledit longeron (3), avec un moyen de blocage (9,10), et un second passage (12) orthogonal au premier passage (8) avec un moyen de blocage (13,14), ce second passage (12) étant traversé par un bras (15) dirigé vers l'extérieur du véhicule en position d'utilisation et muni d'un collier (16) contenant libre en rotation le tronçon de base (17) d'un mât télescopique (18), l'une au moins des deux traverses (1,2) étant pourvue d'un berceau (19) apte à recevoir le tronçon fixe de base (17) du mât télescopique (18) quand celui-ci est mis en position horizontale.

2. Dispositif pour l'équipement d'un véhicule servant à la prise de vues à partir d'un point élevé au-dessus du sol, caractérisé en ce qu'il comprend deux traverses (1,2) se fixant au-dessus du pavillon de ce véhicule, au moins un longeron de type télescopique ayant un premier élément (3'), élément fixé aux traverses (1,2) et un second élément (24) mobile par rapport audit élément fixe (3') et muni d'un moyen de réglage en position (11) du type défini à la revendication 1 pourvu d'un bras (15) portant le tronçon fixe de base (17) d'un mât télescopique (18), cependant que l'une des traverses (1) est pourvue d'un berceau (19).

3. Dispositif pour l'équipement d'un véhicule servant à la prise de vues à partir d'un point élevé au-dessus du sol, caractérisé en ce qu'il comprend deux longerons ayant des premiers éléments fixes (3',3") réunis par des lames transversales (1,2) pour constituer un chemin de guidage rigide se fixant au-dessus du pavillon du véhicule et des seconds éléments (24,25) réunis par des lames transversales (26'-26"") pour constituer un chariot rigide déplaçable le long dudit chemin de guidage, l'une des barres transversales (26') dudit chariot portant un moyen de réglage en position (11) du type défini à la revendication 1, et muni d'un bras (15) portant le tronçon de base (17) d'un mât télescopique (18), cependant qu'une autre des barres transversales (26"") est pourvue d'un berceau (19).

4. Dispositif selon la revendication 3 caractérisé en ce que les premiers éléments fixes (3',3") des longerons sont immobilisés sur le véhicule dans le sens longitudinal de ce dernier et le bras (15) est réuni au tronçon de base (17) du mât télescopique (18) par un collier (16) à serrage réglable permettant de bloquer ou de laisser coulisser ce tronçon de base (17) la face extrême inférieure de ce dernier ayant un logement capable de recevoir une boule de remorquage (47) équipant ledit véhicule.

5. Dispositif selon la revendication 2 caractérisé en ce qu'il comprend deux longerons espacés de type télescopique ayant chacun un premier élément (3', 3") fixé aux traverses (1,2) et un second élément mobile (24,25) par rapport à l'élément fixe correspondant (3',3") ces seconds éléments mobiles (24,25) étant reliés à leurs extrémités libres par une barre transversale (26) et celle-ci est pourvue du moyen de réglage en position (11).

6. Dispositif selon la revendication 5, caractérisé en ce qu'une barre oblique télescopique (27) est articulée par une extrémité avec le premier élément fixe (3') et par son extrémité opposée avec le second élément mobile(25) de l'autre longeron (3") ou avec la barre transversale (26).

7. Dispositif selon l'une quelconque des revendications 1 à 3 caractérisé en ce qu'il comprend une plaque de soutien (23, 23') destinée à être montée à la partie inférieure du véhicule.

8. Dispositif selon l'une quelconque des revendications 1 à 3 caractérisé en ce que le tronçon fixe de base (17) du mât télescopique (18) est équipé de deux vérins espacés (28,29) destinés à prendre appui sur le sol lorsque le mât (18) est mis en position verticale.

9. Dispositif selon l'une quelconque des revendications 1 à 8, caractérisé en ce que le mât (18) est équipé à son sommet d'un organe de montage (30 d'appareils, cet organe (30) ayant une plaque de base (32) de fixation au mât (18) et une plateforme supérieure (41) inclinable autour de deux axes (34,40) qui sont de préférence orthogonaux.

10. Dispositif selon la revendication 9, caractérisé en ce que la plaque de base (32) supporte un palier (33) contenant un premier axe (34) auquel est fixée une plaque intermédiaire (35), et un premier moteur (36) commandable à distance relié fonctionnellement à la plaque intermédiaire (35) pour la faire pivoter autour de l'axe (34), cette plaque intermédiaire (35) supporte un palier (39) contenant un second axe (40) auquel est fixée la plateforme supérieure - (41), et un second moteur (42) relié fonctionnellement à la plateforme supérieure (41) pour la faire pivoter autour du second axe (40).

11. Dispositif selon l'une quelconque des revendications 9,10 caractérisé en ce que la plateforme supérieure (41) est équipée de moyens permettant de fixer un appareil photographique ayant un viseur, ou une caméra de cinéma ayant un viseur, et, en arrière de ce viseur, sur son axe optique, une caméra de télévision.

12. Dispositif selon l'une quelconque des revendications 1 à 11 caractérisé en ce que le tronçon fixe de base (17) du mât (18) est muni d'échelons (45) d'accès à son sommet quand il est rétracté et vertical.

13. Dispositif selon la revendication 9 caractérisé en ce que l'organe de montage (30) est monté au sommet du mât télescopique (18) de manière orientable autour de l'axe général de ce mât, le mouvement étant obtenu à l'aide d'un moteur commandé à distance.

14. Dispositif selon la revendication 2 caractérisé en ce que le bras (15) est articulé avec le tronçon de base (17) du mât télescopique (18) au moyen d'un arbre (48) disposé à une position perpendiculaire à la direction générale dudit mât (18).

0 196 247

Fig.1

**Fig. 2**

**Fig. 3**

0 196 247

Fig: 4

Fig: 5

*Fig: 6*

3'  19  24  2  11  26'

26''''  26'''  26''  25

1

3''

46  46

*Fig: 7*

3'  26''  24  2  15  18

25  16

3''  46  11 48  17

26'

47

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 128 312 (KRATZENBERG) <br> * Page 1, lignes 21-25 * | 1 | B 60 R 11/04 |
| A | US-A-2 749 188 (MITCHELL) | | |
| A | FR-A-1 094 323 (ADRIAENSSENS) | | |
| A | US-A-2 586 531 (GORDON) | | |

| DOMAINES TECHNIQUES RECHERCHES (Int. Cl.4) |
|---|
| B 60 R <br> B 60 P <br> H 04 N |

Le présent rapport de recherche a été établi pour toutes les revendications

| Lieu de la recherche | Date d'achèvement de la recherche | Examinateur |
|---|---|---|
| LA HAYE | 16-06-1986 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82